# EUROPÄISCHE PATENTSCHRIFT

(11) **EP 2 102 052 B1**
(45) Veröffentlichungstag und Bekanntmachung des Hinweises auf die Patenterteilung: **31.03.2010**
(21) Anmeldenummer: 07815147.9
(22) Anmeldetag: 15.10.2007
(51) Int. Cl.: B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION REGLABLE POUR UN VEHICULE AUTOMOBILE

(30) Priorität: 16.01.2007 DE 102007003091
(43) Veröffentlichungstag der Anmeldung: 23.09.2009
(73) Patentinhaber: ThyssenKrupp Presta Aktiengesellschaft, 9492 Eschen (LI)
(72) Erfinder: SCHNITZER, Rony, FL-9491 Ruggell (LI); HEIML, Roland, A-4870 Vöcklamarkt (AT)
(74) Vertreter: Hofmann, Ralf U.
(86) Internationale Anmeldenummer: PCT/AT2007/000480
(87) Internationale Veröffentlichungsnummer: WO 2008/086548

(56) Entgegenhaltungen:
- EP-A- 0 440 403
- US-A1- 2006 090 586

## Beschreibung

Die Erfindung betrifft eine verstellbare Lenksäule für ein Kraftfahrzeug mit einer in mindestens einer Stellrichtung verstellbaren Stelleinheit, einer in diese Stellrichtung unverstellbaren Halteeinheit und einer Feststelleinrichtung, in deren geöffnetem Zustand die Stelleinheit gegenüber der Halteeinheit zur Einstellung der Position der Lenksäule verstellbar ist und in deren geschlossenem Zustand die Stelleinheit gegenüber der Halteeinheit von der Feststelleinrichtung festgestellt ist und die einen Spannbolzen, der Öffnungen in der Stelleinheit und Halteeinheit durchsetzt, mindestens eine vom Spannbolzen durchsetzte Zahnplatte, die mindestens eine Verzahnung mit vom Spannbolzen weggerichteten Zähnen aufweist, und mindestens eine dem Spannbolzen zugewandte Verzahnung der Halteinheit zum Zusammenwirken mit der mindestens einen Verzahnung der Zahnplatte im geschlossenen Zustand der Feststelleinrichtung umfasst.

Verstellbare Lenksäulen dienen zur Anpassung der Position des Lenkrades an die Sitzposition des Fahrers und sind in unterschiedlichen Ausführungsformen bekannt. Neben verstellbaren Lenksäulen, die nur in die Längen- oder Höhen- bzw. Neigungsrichtung verstellbar sind, sind sowohl in die Längen- als auch Höhen- bzw. Neigungsrichtung verstellbare Lenksäulen bekannt. Beispielsweise geht eine derartige verstellbare Lenksäule aus der EP 0 802 104 A1 hervor. Im geöffneten Zustand der Feststelleinrichtung ist eine Stelleinheit, welche die Lenkspindel drehbar lagert, gegenüber einer chassisfesten Halteeinheit sowohl in Richtung einer Längenverstellung als auch in Richtung einer Höhen- bzw. Neigungsverstellung der Lenksäule verstellbar. Um die Haltekräfte im geschlossenen Zustand der Feststelleinrichtung zu erhöhen, umfasst die Feststelleinrichtung nach Art einer Lamellenkupplung zusammenwirkende sich kreuzende Lamellenpakete.

Für verstellbare Lenksäulen stellt sich das Problem, dass im Crash-Fall ein unkontrolliertes Verstellen der Lenksäule verhindert werden muss, damit beispielsweise die Funktion des Airbags nicht beeinträchtigt wird und/oder die Energie beim Aufprall des Fahrers auf das Steuerrad kontrolliert abgebaut werden kann. Gleichzeitig soll die Feststelleinrichtung leichtgängig und mit geringen Wegen der Betätigungsglieder geöffnet und geschlossen werden können und nur wenig Bauraum einnehmen.

Neben verstellbaren Lenksäulen mit reibschlüssig wirkenden Feststelleinrichtungen sind formschlüssig wirkende Feststelleinrichtungen bekannt, bei denen im geschlossenen Zustand gezahnte Feststellelemente miteinander in Eingriff gelangen. Ein Problem besteht hierbei darin, dass beim Schließen die Zähne der Feststellelemente direkt aufeinander treffen können. Verschiedene Einrichtungen, die dies verhindern sollen, sind bekannt geworden. Aus der EP 1 500 570 A2 sind hierbei Feststellelemente eingesetzt, die Reihen von zueinander versetzten Zahnungen aufweisen. Die Verzahnungen sind hierbei an zueinander keilförmig stehenden Flächen von Zahnleisten angeordnet, die in einem vom Spannbolzen der Feststelleinrichtung durchsetzten Grundkörper gehalten sind.

Aus der US 6,139,057 A ist eine formschlüssig wirkende Feststelleinrichtung bekannt, bei welcher durch das Schließen der Feststelleinrichtung durch einen Betätigungshebel verschwenkbare Zahnteile mit Gegenverzahnungen in Eingriff gelangen. Um, falls beim Schließen der Feststelleinrichtung die Spitzen der Zähne der Verzahnung eines Zahnteils auf die Spitzen der Zähne der Gegenverzahnung (diese Stellung wird auch als "Zahn-auf-Zahn-Stellung" bezeichnet) auftreffen, dennoch ein vollständiges Verschwenken des Betätigungshebels in seine Schließstellung ohne einen zu großen Widerstand zu ermöglichen, sind die die Verzahnungen tragenden Blechplatten gegenüber der sie tragenden Welle elastisch gelagert. Um bei allen Einstellpositionen der Stelleinheit einen Zahneingriff zu erhalten, sind für jede Stellrichtung zwei nebeneinanderliegende Zahnplatten mit versetzten Zähnen vorgesehen.

Weiters geht aus der US 2006/0090586 A1 eine verstellbare Lenksäule der eingangs genannten Art hervor, bei der im geschlossenen Zustand der Feststelleinrichtung zur reibschlüssigen Halterung der Stelleinheit gegenüber der Halteeinheit Seitenwangen der chassisfesten Halteeinheit an die Stelleinheit angedrückt sind. Um im Crash-Fall ein Aufrichten (= eine Neigungs- bzw. Höhenverstellung) der Lenksäule zu verhindern, ist zusätzlich eine drehbar auf dem Spannbolzen angeordnete Zahnplatte mit einer an einem Seitenrand ausgebildeten Verzahnung vorgesehen. Beim Schließen des Spannhebels wird die Verzahnung der Zahnplatte mittels einer vom Spannhebel mitgenommenen Feder gegen eine Gegenverzahnung gedrückt. Beim Öffnen des Spannhebels wird die Zahnplatte durch einen Mitnehmer des Spannhebels um die Achse des Spannbolzens verschwenkt und außer Eingriff mit der Gegenverzahnung gebracht. Im Crash-Fall wird die Verzahnung, falls sie beim Schließen der Feststelleinrichtung nicht bereits mit der Gegenverzahnung in Eingriff gebracht worden ist, nach einer kleinen anfänglichen Verschiebung der Stelleinheit und einer damit einhergehenden Verschiebung des Spannbolzens und der auf diesem angeordneten Zahnplatte mit der Gegenverzahnung in Eingriff gebracht. Da die Zahnplatte im geschlossenen Zustand der Feststelleinrichtung nur durch die Feder gegen die Gegenverzahnung gedrückt wird, kann im Crash-Fall eine Gefahr des Durchrutschens der beiden Verzahnungen bestehen bzw. muss die Feder sehr stark ausgelegt werden, wodurch die Schließkraft für die Feststelleinrichtung erhöht wird.

Die DE 10 2004 051 060 B3 zeigt eine verstellbare Lenksäule, bei der eine Crash-Blockiereinrichtung vorhanden ist, von der im Crash-Fall eine zusätzliche Haltekraft gegen eine Verschiebung der Stelleinheit gegenüber der Halteeinheit ausgeübt wird. Hierbei wird im Crash-Fall ein Klemmkeil in einen Spalt zwischen der Stelleinheit und der Halteeinheit eingeschoben. Der Klemmkeil steht mit einem beim Öffnen und Schließen der Feststelleinrichtung sich bewegenden Teil der Feststelleinrichtung in Verbindung, sodass beim Schließen der Feststelleinrichtung eine Kontaktfläche des Klemmkeils an eine Anlagefläche der Stelleinheit anlegbar ist, um den Klemmkeil im Crash-Fall bei einer einsetzenden Verschiebung der Stelleinheit von dieser mitzunehmen.

Aufgabe der Erfindung ist es, eine verstellbare Lenksäule der eingangs genannten Art bereitzustellen, bei der im geschlossenen Zustand der Feststelleinrichtung in einfacher Weise zumindest in einer vorgegebenen Stellrichtung einer Verschiebung der Stelleinheit gegenüber der Halteeinheit auch bei höheren einwirkenden Kräften entgegengewirkt wird, wobei die Bedienkräfte der Feststelleinrichtung auf einem niedrigen Niveau gehalten sind. Erfindungsgemäß gelingt dies durch eine verstellbare Lenksäule mit den Merkmalen des Anspruchs 1. Vorteilhafte Weiterbildungen gehen aus den Unteransprüchen hervor.

Bei einer Lenksäule der Erfindung ist eine unter der von der Feststelleinrichtung in ihrem geschlossenen Zustand ausübbaren Spannkraft elastisch biegbare Zahnplatte zwischen der Halteeinheit und einem von der Achse des Spannbolzens durchsetzten Andrückteil angeordnet. Die mindestens eine Verzahnung der Zahnplatte ist vom Spannbolzen weggerichtet und ihre Zähne sind vorzugsweise rechtwinklig zur Längsachse des Spannbolzens und rechtwinklig zur Stellrichtung ausgerichtet, in die die Zahnplatte wirksam ist. Die mindestens eine Verzahnung der Halteeinheit, die mit der mindestens einen Verzahnung der Zahnplatte zusammenwirkt, ist dem Spannbolzen zugewandt und die Zähne dieser Verzahnung sind vorzugsweise rechtwinklig zur Längsachse des Spannbolzens und rechtwinklig zur Stellrichtung ausgerichtet, in die die Zahnplatte wirksam ist.

Beim Schließen der Feststelleinrichtung wird die Zahnplatte vom Andrückteil gegen die Halteeinrichtung gedrückt, wobei die Zähne der mindestens einen Verzahnung der Zahnplatte entweder direkt in Eingriff mit den entsprechenden Zähnen der mindestens einen Verzahnung der Halteeinheit gelangen oder unter elastischer Durchbiegung der Zahnplatte auf den Seitenflächen der Zähne der Verzahnung der Halteeinheit aufliegen. Im letzteren Fall kommt es erst zu einem gegenseitigen Zahneingriff, wenn die Zahnplatte bei einer ausreichend hohen Krafteinwirkung in die Stellrichtung, in welche sie wirkt, gegenüber der Halteeinheit durchzurutschen beginnt und nach einer geringen Verschiebung der Zahnplatte gegenüber der Halteeinheit die Zähne der Zahnplatte neben die Zahnzwischenräume der Verzahnung der Halteeinheit gelangen und durch die Elastizität der Platte in diese Zahnzwischenräume eingedrückt werden. Beim Öffnen der Feststelleinrichtung wird das Andrückteil durch Federkraft von der Halteeinheit weggedrückt und die mindestens eine Verzahnung der Zahnplatte wird durch Federkraft in achsialer Richtung des Spannbolzens von der mindestens einen Verzahnung der Halteeinheit durch Federkraft distanziert. Diese Federkraft kann in einer vorteilhaften Ausführungsform der Erfindung von der elastischen Zahnplatte selbst aufgebracht werden, beispielsweise indem diese mit federelastischen Armen ausgestattet ist, die sich an der Halteinheit abstützen. Hierbei kann die Zahnplatte auch eine üblicherweise vorhandene Öffnungsfeder der Feststelleinrichtung ersetzen. Statt dessen oder zusätzlich könnte auch mindestens ein separates Federelement vorgesehen sein.

Vorzugsweise ist vorgesehen, dass im geschlossenen Zustand der Feststelleinrichtung die Stelleinheit gegenüber der Halteeinheit gegen eine Verstellung in die mindestens eine Stellrichtung reibschlüssig gehalten ist. Es sind also durch die Feststelleinrichtung aneinander angedrückte Reibflächen der Stelleinheit und Halteeinheit vorhanden, die Feststellelemente der Feststelleinrichtung bilden. Die mindestens eine Verzahnung der Zahnplatte und die mit dieser Verzahnung zusammenwirkende Verzahnung der Halteeinheit bilden zusätzliche formschlüssig wirkende Feststellelemente, die im Crash-Fall zumindest bei einer einsetzenden Verschiebung der Stelleinheit gegenüber der Halteeinheit in die Stellrichtung, in welche die Zahnplatte wirkt, in Eingriff gelangen, um eine weitere Verschiebung der Stelleinheit in diese Stellrichtung zu verhindern. Auch bei in anderer Weise aufgebrachten relativ hohen auf die Lenksäule einwirkenden Kräften, beispielsweise wenn sich der Fahrer am Lenkrad hochzieht, wirken diese formschlüssigen Feststellelemente einer Verschiebung in die vorgesehene Verstellrichtung entgegen, zumindest nach einer geringfügigen anfänglichen Verschiebung.

Die mögliche anfängliche Verschiebung, vor die Verzahnungen der Zahnplatte und der Halteeinheit ineinander eingreifen, ist kleiner als der Abstand zwischen zwei aufeinanderfolgenden Zähnen dieser Verzahnungen.

Die Stelleinheit, die von der mit dem Chassis des Kraftfahrzeugs verbindbaren Halteeinheit getragen ist, kann in einer Ausführungsform der Erfindung direkt die Lenkspindel drehbar lagern (und als sogenanntes Mantelrohr ausgebildet sein). In einer anderen Ausführungsform kann die Stelleinheit eine Manteleinheit in eine weitere Stellrichtung verstellbar lagern, welche ihrerseits die Lenkspindel drehbar lagert. In beiden Fällen trägt die Stelleinheit die Lenkspindel.

Eine vorteilhafte Weiterbildung sieht vor, dass zur Ausrichtung der Zahnplatte gegenüber der Verzahnung der Halteeinheit das Andrückteil mindestens einen in eine Fensterausnehmung der Zahnplatte und ein Langloch der Halteeinheit eingreifenden Fortsatz aufweist.

Weitere Vorteile und Einzelheiten der Erfindung werden im Folgenden anhand der beiliegenden Zeichnung erläutert. In der Zeichnung zeigen:
- Die Fig. 1a bis 3a: Schrägsichten einer Seitenwange einer Halteeinheit zusammen mit der Zahnplatte zur Erläuterung des Funktionsprinzips;
- die Fig. 1 b bis 3b: vergrößerte Ausschnitte der Fig. 1 a bis 3a;
- die Fig. 4 bis 6: den Fig. 1a bis 3a entsprechende Darstellungen, aber aus einem anderen Blickwinkel, wobei in Fig. 4 zusätzlich das Andrückteil nach Art einer Explosionsdarstellung von den anderen Teilen abgehoben dargestellt ist;
- Fig. 7: eine Schrägsicht einer Lenksäule gemäß der Erfindung, wobei für die Erfindung unwesentliche Teile weggelassen sind, im geöffneten Zustand der Feststelleinrichtung;
- Fig. 8: eine Darstellung entsprechend Fig. 7, aber im geschlossenen Zustand der Feststelleinrichtung;
- Fig. 9: eine Darstellung entsprechend Fig. 8, aber die Verzahnungen der Zahnplatte und der Halteeinheit im gegenseitigen Eingriff;
- Fig. 10: eine Schrägsicht eines weiteren Ausführungsbeispiel der Erfindung;
- Fig. 11: eine Schrägsicht eines dritten Ausführungsbeispiel der Erfindung, Teile der Feststelleinrichtung explosionsartig auseinandergezogen dargestellt;
- Fig. 12: eine Schrägsicht eines vierten Ausführungsbeispiels der Erfindung;
- Fig. 13: eine perspektivische Ansicht einer Ausführungsform des Andrückteils.

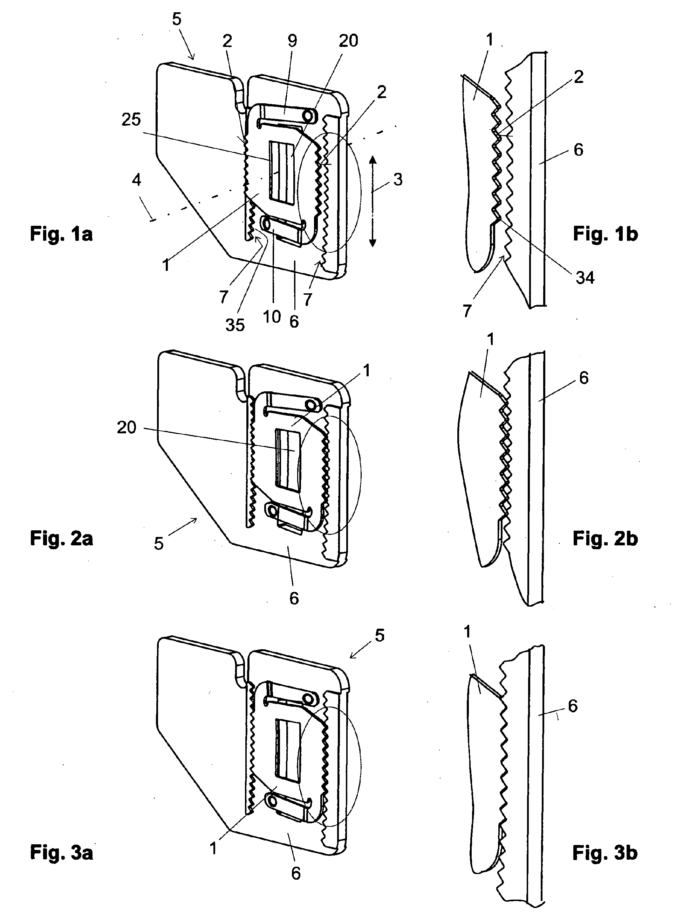

Anhand der Fig. 1 bis 6 soll zunächst das Funktionsprinzip der Zahnplatte der erfindungsgemäßen Lenksäule erläutert werden. Die Zahnplatte 1, die auch als "Zahnlamelle" oder "Zahnscheibe" bezeichnet werden könnte, besitzt mindestens eine Verzahnung 2, deren Zähne in einer Reihe liegen, die sich in die Stellrichtung 3 erstreckt, in welcher die Zahnplatte 1 wirksam ist. Die mindestens eine Verzahnung 2 ist von einem Spannbolzen der Feststelleinrichtung weggerichtet, von dem in Fig. 1a nur die Längsachse 4 dargestellt ist. Die Kämme 34 der Zähne der Verzahnung 2 erstrecken sich in Richtung parallel zur Längsachse 4 des Spannbolzens.

Vorzugsweise ist die mindestens eine Verzahnung 2 an einem zumindest im Wesentlichen in die Stellrichtung 3, in der die Zahnplatte 1 wirksam ist, sich erstreckenden Seitenrand der Zahnplatte 1 ausgebildet.

Ein Teil der Halteeinheit 5, vorzugsweise eine Seitenwange 6 der Halteeinheit 5 weist mindestens eine Verzahnung 7 auf, die in einer Reihe liegen, die sich in die Stellrichtung 3 erstreckt und die zum Zusammenwirken mit der mindestens einen Verzahnung 2 der Zahnplatte 1 vorgesehen ist. Diese mindestens eine Verzahnung 7 ist der Längsachse 4 zugewandt. Die Kämme 35 der Zähne der Verzahnung 7 erstrecken sich in Richtung parallel zur Längsachse 4 des Spannbolzens. Vorzugsweise weist die Zahnplatte 1 erste und zweite solche Verzahnungen 2 auf, die voneinander weggerichtet sind und die Halteeinheit 5 weist erste und zweite solche Verzahnungen 7 auf, die einander zugewandt sind und zum Zusammenwirken mit den ersten und zweiten Verzahnungen 2 der Zahnplatte 1 vorgesehen sind.

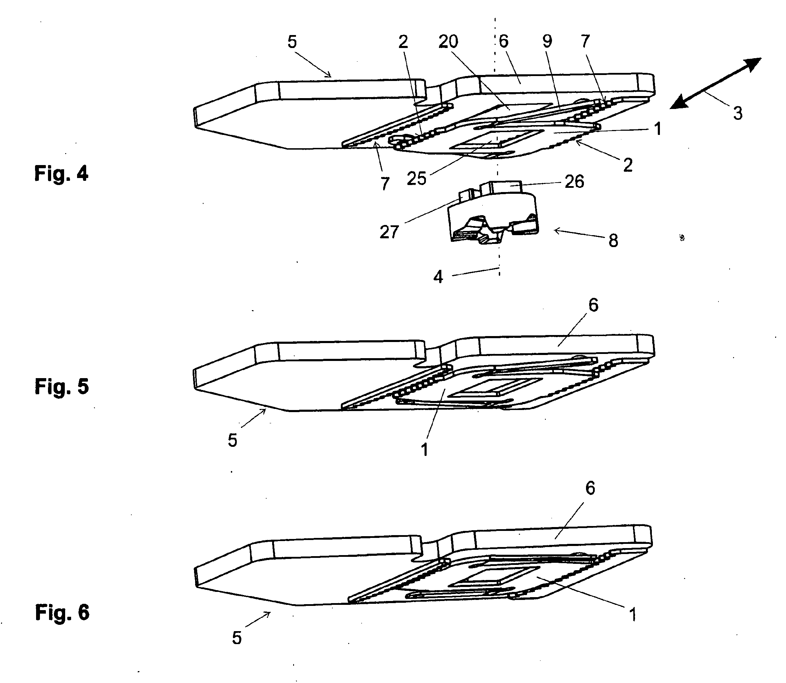

Im geöffneten Zustand der Feststelleinrichtung ist die mindestens eine Verzahnung 2 der Zahnplatte 1 von der mindestens einen Verzahnung 7 der Halteeinheit 5 in Richtung der Längsachse 4 distanziert, vgl. Fig. 1 und 4. Wenn die Feststelleinrichtung geschlossen wird, so wird die mindestens eine Verzahnung 2 der Zahnplatte 1 in Richtung zur Halteeinheit 5 verschoben. Diese Verschiebung erfolgt mittels eines Andrückteils 8 der Feststelleinrichtung, welches in Fig. 4 von der Zahnplatte 1 und Halteeinheit 5 weggezogen dargestellt ist. Wenn sich beim Andrücken der Zahnplatte 1 an die Halteeinheit 5 die Zähne der mindestens einen Verzahnung 2 nicht gerade in einer Stellung befinden, in der sie in die Zahnzwischenräume der mit dieser Verzahnung 2 zusammenwirkenden Verzahnung 7 der Halteeinheit 5 einfahren können, so kommt es zur gegenseitigen Ablage der einander zugewandten Seitenfläche der Zähne, vgl. Fig. 2 und 5. Da sich die mindestens eine Verzahnung 2 der Zahnplatte 1 seitlich des Andrückbereichs befindet, über welchen das Andrückteil 8 an der Zahnplatte 1 anliegt, und aufgrund der Elastizität der Zahnplatte 1 kann die Zahnplatte 1 in diesem Andrückbereich vom Andrückteil 8 an die Oberfläche der Halteeinheit 5 angedrückt werden, sodass ein Betätigungshebel der Feststelleinrichtung trotz der aufeinander aufliegenden Zähne der Verzahnungen 2, 7 ohne merklich größeren Kraftaufwand in die Schließstellung gebracht werden kann.

Wenn die Zahnplatte 1 ausgehend von der in den Fig. 2 und 5 dargestellten Stellung geringfügig in die Stellrichtung 3 verschoben wird, so gelangen die Zähne der mindestens einen Verzahnung 2 neben die Zahnzwischenräume der Zähne der Verzahnung 7, sodass die Zähne der Verzahnung 2 aufgrund der Rückstellkraft der elastischen Zahnplatte 1 in die Zahnzwischenräume der Zähne der Verzahnung 7 einschnappen. Dieser Zustand, in dem die Zähne der Verzahnungen 2, 7 im Eingriff sind, ist in den Fig. 3 und 6 dargestellt. Abhängig von der Stellposition der Zahnplatte 1 gegenüber der Halteeinheit 5 beim Schließen der Feststelleinrichtung kann dieser in den Fig. 3 und 6 dargestellte Zustand auch gleich nach dem Schließen der Feststelleinrichtung eingenommen werden.

Die Zahnplatte 1 besitzt federelastische Arme 9, 10, die sich an der Halteeinheit 5 abstützen. Wenn die Feststelleinrichtung geöffnet wird, so wird von diesen elastischen Armen 9, 10 der die mindestens eine Verzahnung 2 aufweisende Abschnitt der Zahnplatte 1 und mit diesem das Andrückteil 8 von der Halteeinheit 5 weggedrückt, wodurch die Zähne der mindestens einen Verzahnung 2 wiederum von den Zähnen der mindestens einen Verzahnung 7 in Richtung der Längsachse 4 distanziert werden und der Zustand gemäß Fig. 1 eingenommen wird.

Bevorzugt ist die Zahnplatte als einteiliges Blechstanzteil ausgebildet.

Grundsätzlich könnte die Zahnplatte 1 auch nur eine Verzahnung 2 aufweisen, die mit einer Verzahnung 7 der Halteeinheit 5 zusammenwirkt. Der gegenüberliegende Seitenrand könnte beispielsweise glatt ausgebildet sein und frei sein oder im geschlossenen Zustand der Feststelleinrichtung mit dem in die Stellrichtung 3 sich erstreckenden Rand eines Steges der Halteeinheit 5 zusammenwirken.

Anstelle der elastischen Arme 9, 10 oder zusätzlich zu diesen kann auch mindestens eine separate Feder vorgesehen sein, um die Verzahnungen 2, 7 im geöffneten Zustand der Feststelleinrichtung zu distanzieren.

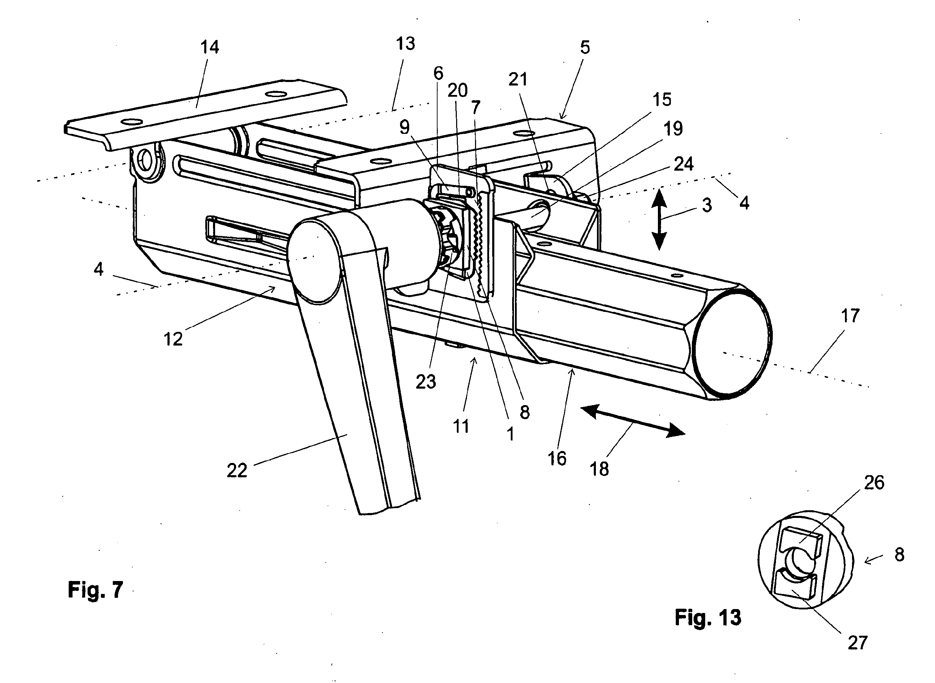

In der Folge wird anhand der Fig. 7 bis 9 ein erstes Ausführungsbeispiel einer Lenksäule gemäß der Erfindung beschrieben, in welche die zuvor beschriebenen Teile integriert sind. Die Lenksäule umfasst eine am Chassis eines Kraftfahrzeuges befestigbare Halteeinheit 5. Gegenüber der Halteeinheit 5 ist eine Stelleinheit 11 im geöffneten Zustand einer Feststelleinrichtung 12 in die der Höhen- bzw. Neigungsverstellung entsprechende Stellrichtung 3 verstellbar. Hierbei kann die Stelleinheit 11 um eine Schwenkachse 13 verschwenkt werden, welche im gezeigten Ausführungsbeispiel von einem am Chassis des Kraftfahrzeugs befestigbaren Haltebügel 14 gebildet wird, der die Stelleinheit 11 um die Schwenkachse 13 verschwenkbar lagert. Die Stellrichtung 3 kann an jenem Punkt des Kreisbogens, den die Längsachse 4 des Spannbolzens 19 beschreibt als Tangente an diesem Kreisbogen angesehen werden; die Stellrichtung 3 könnte auch angenähert als Tangente am Punkt einer Mittelstellung angesehen werden. Wenn also in der Erfindung von einer Verzahnung, die sich in die Stellrichtung erstreckt, gesprochen wird, so ist damit die Ausrichtung auf einer Kreisbahn oder einer entsprechend angenäherten Geraden damit umfasst. So ist auch die Begriffsbildung "im Wesentlichen" in Bezug auf die Verstellrichtung zu verstehen.

Die Halteeinheit 5 besitzt beidseitig der Stelleinheit 11 angeordnete Seitenwangen 6, 15. Im geschlossenen Zustand der Feststelleinrichtung sind die Seitenwangen 6, 15 beidseitig gegen die Stelleinheit 11 verspannt, wobei die Stelleinheit 11 gegen eine Verschiebung in die Stellrichtung 3 reibschlüssig gehalten ist.

Im Ausführungsbeispiel gemäß den Fig. 7 bis 9 ist weiters eine von der Stelleinheit 11 zumindest teilweise umschlossene Manteleinheit 16 vorhanden, welche einen an das lenkradseitige Ende der Lenksäule anschließenden Abschnitt der Lenkspindel, von der in den Fig. 7 bis 9 lediglich die Längsachse 17 dargestellt ist, drehbar lagert. Die Manteleinheit 16 kann im geöffneten Zustand der Feststelleinrichtung 12 gegenüber der Stelleinheit 11 in die der Längenverstellung entsprechende Stellrichtung 18 verschoben werden. Im geschlossenen Zustand der Feststelleinrichtung 12 ist die Stelleinheit 11 gegen die Manteleinheit 16 verspannt, wodurch die Längsverstellung der Manteleinheit 16 reibschlüssig festgestellt ist.

Die Manteleinheit 16 weist an der von der Längsachse 17 der Lenkspindel weggerichteten Oberfläche in Umfangsrichtung mehrere ebene Flächenabschnitte auf, die zumindest teilweise als Reibflächen wirken. Die Stelleinheit 11, die die Manteleinheit 16 zumindest teilweise umschließt, weist an ihrer zur Längsachse 17 gerichteten Oberfläche ebenfalls mehrere ebene Flächenabschnitt auf, die zumindest teilweise als Reibflächen wirken. Die ebenen Flächenabschnitt der Manteleinheit 16 und der Stelleinheit 11 erstrecken sich in Richtung der Längsachse 17 der Lenkspindel. Vorzugsweise sind je drei solcher ebener Flächenabschnitte, die jeweils winkelig zueinander stehen, im geschlossenen Zustand der Feststelleinrichtung 12 in reibschlüssigen Kontakt bringbar, um die eingestellte Längsposition der Manteleinheit 16 zu fixieren. Durch diese Ausbildung ist die Manteleinheit 16 gegenüber der Stelleinheit 11 weiters um die Längsachse 17 der Lenkspindel verdrehgesichert. Anstelle einer rein reibschlüssigen Feststellung der Manteleinheit 16 gegenüber der Stelleinheit 11 im geschlossenen Zustand der Feststelleinrichtung 12 könnte diese Feststellung auch reib- und formschlüssig sein.

Anstelle der reibschlüssigen Halterung der Stelleinheit 11 gegenüber der Halteeinheit 5 im geschlossenen Zustand der Feststelleinrichtung 12 könnte diese Halterung auch reib- und formschlüssig sein.

Die Feststelleinrichtung 12 weist einen Öffnungen in der Stelleinheit 11 und Halteeinheit 5 durchsetzenden Spannbolzen 19 auf, der quer, insbesondere rechtwinklig, zur Längsachse 17 der Lenkspindel ausgerichtet ist. Bei einer Verstellung der Stelleinheit 11 gegenüber der Halteeinheit 5 in die Stellrichtung 3 bewegt sich der Spannbolzen 19 mit der Stelleinheit 11 in die Stellrichtung 3 mit. Die Öffnungen der Stelleinheit 11 für den Spannbolzen 19 weisen hierfür gegenüber diesem nur ein geringes Spiel auf. Die Öffnungen in den Seitenwangen 6, 15 der Halteeinheit 5 sind dagegen als in die Stellrichtung 3 sich erstreckende Langlöcher 20, 21 ausgebildet.

Die Feststelleinrichtung 12 umfasst weiters einen zwischen einer Offen- und einer Schließstellung um die Längsachse 4 des Spannbolzens 19 verschwenkbaren Betätigungshebel 22. Bei seiner Verschwenkung nimmt der Betätigungshebel 22 eine auf dem Spannbolzen 19 drehbar angeordnete Keilscheibe 23 mit, die mit dem ebenfalls vom Spannbolzen 19 durchsetzten Andrückteil 8 zusammenwirkt, welches in diesem Ausführungsbeispiel als weitere Keilscheibe ausgebildet ist. Beim Verschwenken des Betätigungshebels 22 wirken Schrägflächen der Keilscheibe 23 und des als Keilscheibe ausgebildeten Andrückteils 8 zusammen, wodurch einerseits das Andrückteil 8 in Richtung zur Seitenwange 6 gedrückt wird und andererseits der Spannbolzen 19 gegenüber der Halteeinheit 5 verschoben wird, wobei ein Gegenhalteteil 24, beispielsweise eine auf den Spannbolzen 19 aufgeschraubte Mutter, gegen die auf der gegenüberliegenden Seite der Stelleinheit 11 liegende Seitenwange 15 gezogen wird. Durch den auf diese Weise ausgebildeten Spannmechanismus wird die Zahnplatte 1 vom Andrückteil 8 an die Seitenwange 6 angedrückt und werden die Seitenwangen 6 und 15 an die Stelleinheit 11 beidseitig angedrückt, wodurch die Stelleinheit 11 gegenüber der Halteeinheit 5, insbesondere reibschlüssig, gehalten ist.

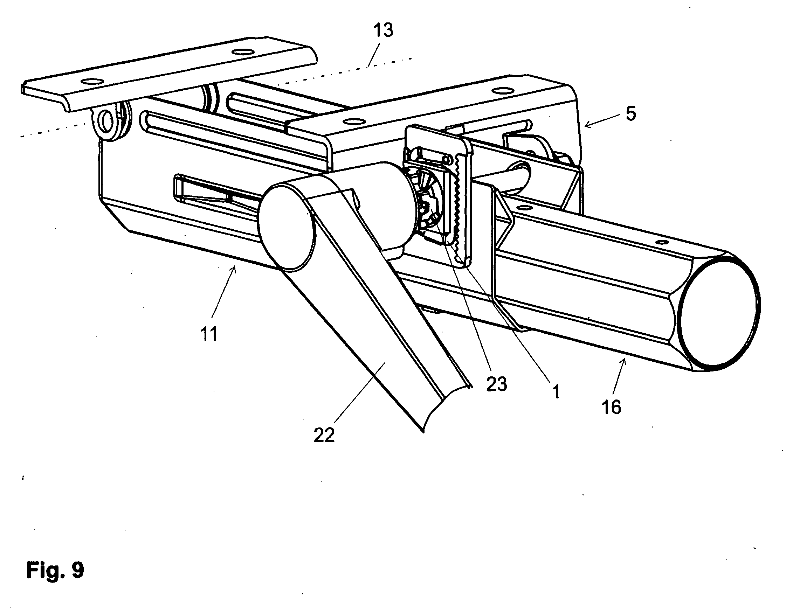

Weiters wird von der Zahnplatte 1 im Zusammenwirken mit der mindestens einen Verzahnung 7 der Seitenwange 6 bei einer höheren in die Stellrichtung 3 einwirkenden Kraft, die die von den Seitenwangen 6, 15 auf die Stelleinheit 11 ausgeübte Haltekraft überwinden würde, einer Verstellung in die Stellrichtung 3 entgegen, zumindest nach einem geringfügigen anfänglichen Verrutschen der Zahnplatte 1 gegenüber der Seitenwange 6, bis die Zähne der Verzahnungen 2, 7 in Eingriff gelangen, wie es in der Fig. 9 veranschaulicht ist.

Bei einer Verstellung der Stelleinheit 11 gegenüber der Halteeinheit 5 in die Stellrichtung 3 wird die Zahnplatte 1 mit dem Spannbolzen 19 in die Stellrichtung 3 mitgenommen. Im gezeigten Ausführungsbeispiel erfolgt diese Mitnahme über das Andrückteil 8, welches in eine vom Spannbolzen 19 durchsetzte Fensterausnehmung 25 der Zahnplatte 1 ragende Fortsätze 26, 27 aufweist. Diese Fortsätze sind in den Fig. 4 und 13 ersichtlich. Die Fortsätze 26, 27 sind hierbei so lang, dass sie auch in das Langloch 20 der Seitenwange 6 ragen, und zwar auch im geöffneten Zustand der Feststelleinrichtung. Hierdurch wird einerseits eine Verdrehsicherung des Andrückteils 8 erreicht und andererseits die Ausrichtung der Zahnplatte 1 gegenüber der Seitenwange 6 bewirkt.

Der geöffnete Zustand der Feststelleinrichtung ist in Fig. 7 dargestellt. Die Lenksäule kann hier in die Stellrichtungen 3, 18 verstellt werden. Die Lage der Zahnplatte 1 gegenüber der Seitenwange 6 entspricht der in den Fig. 1 und 4 dargestellten.

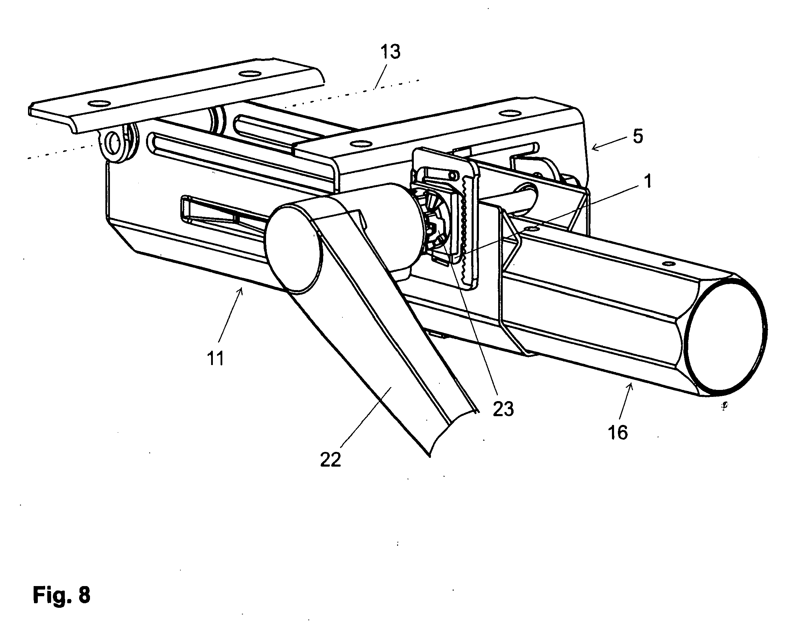

Fig. 8 zeigt den geschlossenen Zustand der Feststelleinrichtung, wobei die Lage der Zahnplatte 1 gegenüber der Seitenwange 6 der in Fig. 2 und 5 dargestellten Lage entspricht.

Fig. 9 zeigt den geschlossenen Zustand der Feststelleinrichtung, wenn die Zähne der Verzahnungen 2, 7 miteinander in Eingriff sind. Die Lage der Zahnplatte 1 gegenüber der Seitenwange 6 entspricht der in den Fig. 3 und 6 dargestellten Lage und diese Lage kann wie bereits erläutert direkt nach dem Schließen der Feststelleinrichtung eingenommen werden, falls beim Schließen der Feststelleinrichtung die Zähne der Verzahnungen 2 den Zahnzwischenräumen der Zähne der Verzahnungen 7 direkt gegenüberliegen und umgekehrt, oder ausgehend von der in Fig. 8 dargestellten Lage erreicht werden, indem auf die Stelleinheit 11 eine Kraft in die Stellrichtung 3 einwirkt, die die Haltekraft übersteigt, welche durch die übrigen zwischen der Stelleinheit 11 und der Halteeinheit 5 in diese Stellrichtung 3 wirkenden Feststellelemente bewirkt wird.

Die Zahnplatte könnte auch auf der dem Betätigungshebel 22 gegenüberliegenden Seite der Halteeinheit 5 angeordnet sein und mit mindestens einer Verzahnung der Seitenwange 15 zusammenwirken. Das die Zahnplatte 1 im geschlossenen Zustand der Feststelleinrichtung 12 an die Seitenwange 15 andrückende Andrückteil könnte beispielsweise auch von einem Bolzenkopf des Spannbolzens 19 gebildet werden.

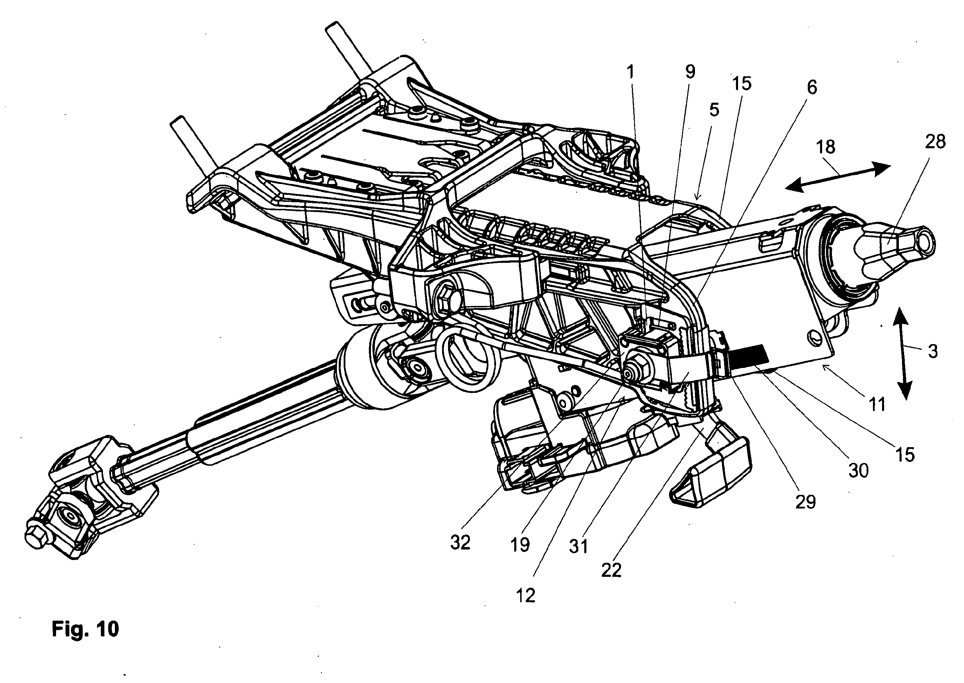

Ein weiteres Ausführungsbeispiel der Erfindung ist in Fig. 10 dargestellt. Die Stelleinheit 11 ist hier gegenüber der Halteeinheit 5 im geöffneten Zustand der Feststelleinrichtung 12 sowohl in die der Höhen- bzw. Neigungsverstellung entsprechende Stellrichtung 3 als auch in die der Längenverstellung entsprechende Stellrichtung 18 verstellbar. Der quer, insbesondere rechtwinklig, zur Längsachse der Lenkspindel 28 stehende Spannbolzen 19 durchsetzt hierzu nicht nur Langlöcher in den Seitenwangen 6, 15, die in die Stellrichtung 3 ausgerichtet sind, sondern auch Langlöcher in der Stelleinheit 11, die in die Stellrichtung 18 ausgerichtet sind. Die Stelleinheit 11 lagert hier direkt die Lenkspindel 28 drehbar (bildet also ein sogenanntes Mantelrohr bzw. eine Manteleinheit).

Im geschlossenen Zustand der Feststelleinrichtung 12 ist die Stelleinheit 11 zwischen den Seitenwangen 6, 15 festgeklemmt. Die Zahnplatte 1 wirkt mit der mindestens einen Verzahnung 7 der Seitenwange 6 der Halteeinheit 5 in der bereits beschriebenen Weise zusammen, wobei der Spannbacken 32 hier das die Zahnplatte 1 im geschlossenen Zustand der Feststelleinrichtung gegen die Halteeinheit 5 andrückende Andrückteil bildet.

Zusätzlich ist bei diesem Ausführungsbeispiel ein Klemmkeil 29 vorhanden, durch den im Crash-Fall eine zusätzliche Haltekraft gegenüber einer Verstellung der Stelleinheit 11 in die Stellrichtung 18 bewirkt wird. Der Klemmkeil 29 ist im geschlossenen Zustand der Feststelleinrichtung an eine Anlagefläche 30 der Stelleinheit 11 angelegt und steht mit dieser im formschlüssigen und/oder reibschlüssigen Kontakt. Dadurch wird der Klemmkeil 29 im Crash-Fall bei einer einsetzenden Verschiebung entlang der Verstellrichtung 18 der Stelleinheit 11 gegenüber der Halteeinheit 5 von der Stelleinheit 11 mitgenommen und kann sich in einem Spalt zwischen der Stelleinheit 11 und der Halteeinheit 5, insbesondere der Seitenwange 6 der Halteeinheit 5, verkeilen. Beim Öffnen der Feststelleinrichtung wird der Klemmkeil 29 von der Anlagefläche 30 der Stelleinheit 11 abgehoben. Hierzu ist er vorzugsweise an einem Tragarm 31 angebracht, über den er mit einem beim Öffnen und Schließen der Feststelleinrichtung 12 sich bewegenden Teil der Feststelleinrichtung in Verbindung steht, insbesondere dem Spannbolzen 19 oder einem auf dem Spannbolzen 19 angeordneten Spannbacken 32. Ein in dieser Weise wirkender Klemmkeil ist aus der in der Beschreibungseinleitung genannten DE 10 2004 051 060 B3 bekannt. Zur Mitnahme der Zahnplatte 1 mit dem Spannbolzen 19 bei dessen Bewegung in die Stellrichtung 3 und zur Ausrichtung der Zahnplatte 1 gegenüber der Seitenwange 6 kann hier der Spannbacken 32 einen in die Fensterausnehmung 25 der Zahnplatte 1 und das Langloch 20 der Seitenwange 6 ragenden Fortsatz aufweisen.

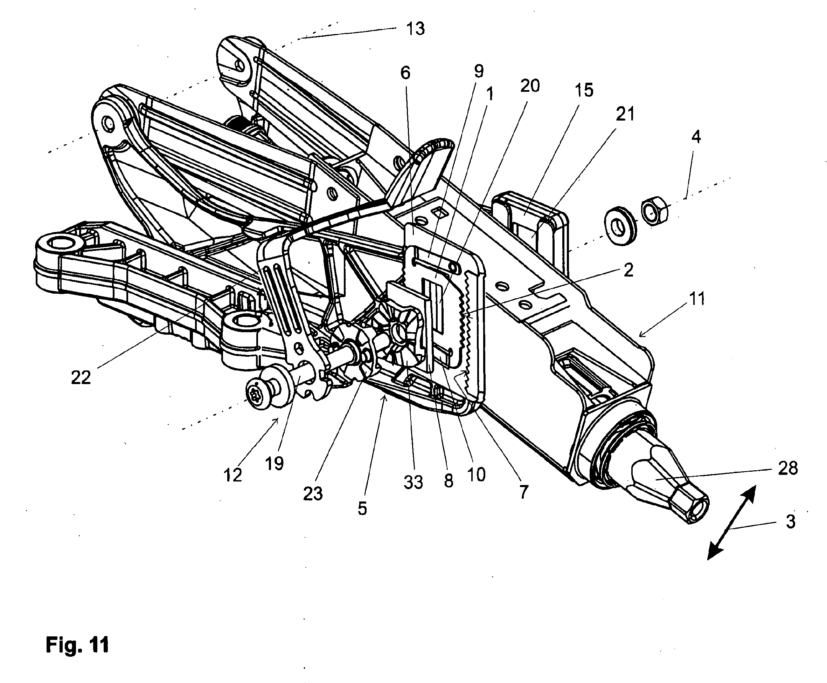

Ein weiteres Ausführungsbeispiel der Erfindung ist in Fig. 11 dargestellt. Die Lenksäule ist hier nur in der der Höhen- bzw. Neigungsverstellung entsprechenden Stellrichtung 3 verstellbar. Hierbei ist die Stelleinheit 11 um die Schwenkachse 13 gegenüber der Halteeinheit 5 verschwenkbar. Analog wie bei den zuvor beschriebenen Ausführungsbeispielen wird die Stelleinheit 11 im geschlossenen Zustand der Feststelleinrichtung 12 zwischen Seitenwangen 6, 15 der Halteeinheit 5 geklemmt. Der Spannbolzen 19 der Feststelleinrichtung 12 durchsetzt hierbei wiederum in die Stellrichtung 3 sich erstreckende Langlöcher 20, 21 in den Seitenwangen 6, 15.

Die Feststelleinrichtung 12 ist analog der bereits im Zusammenhang mit den Fig. 7 bis 9 beschriebenen Feststelleinrichtung ausgebildet. Das die Zahnplatte 1 im geschlossenen Zustand der Feststelleinrichtung 12 an die Seitenwange 6 andrückende Andrückteil 8 wird hier von einer vom Spannbolzen 19 durchsetzten Platte gebildet, welche einteilig mit der Keilscheibe 33 ausgebildet sein kann oder zwischen dieser und der Zahnplatte 1 auf dem Spannbolzen 19 angeordnet sein kann. Am Andrückteil 8 ist wiederum ein in die Fensterausnehmung 25 der Zahnplatte 1 und das Langloch 20 der Seitenwange 6 ragender Fortsatz vorhanden, der in Fig. 11 nicht sichtbar ist.

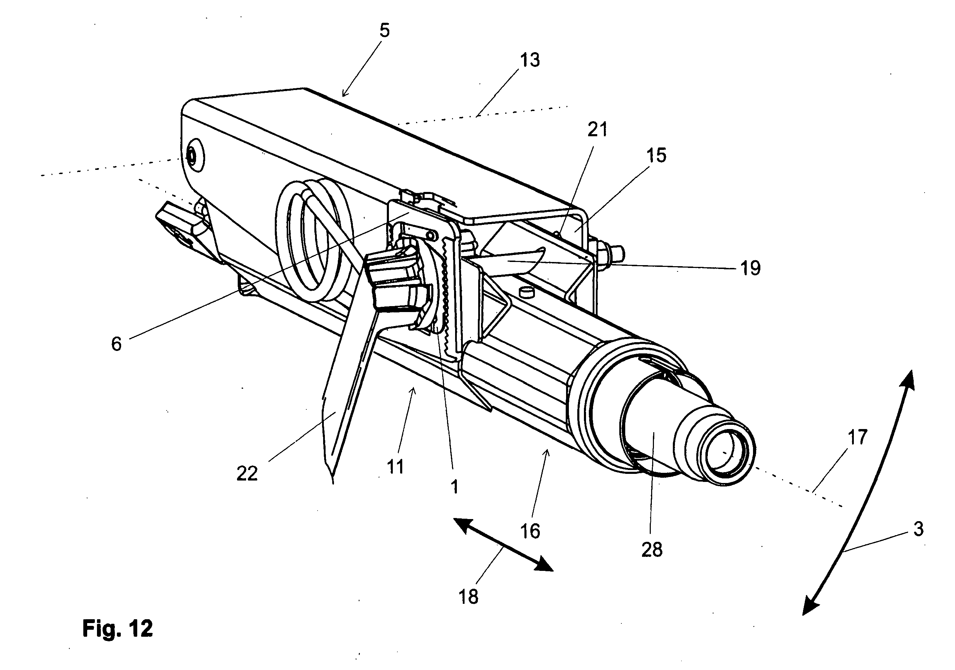

Ein weitere Ausführungsbeispiel der Erfindung ist in Fig. 12 dargestellt. Dieses ist abgesehen von der Ausbildung der Halteeinheit 5 ähnlich dem bereits anhand der Fig. 7 bis 9 erläuterten Ausführungsbeispiel. Die Halteeinheit 5 bildet hier auch die Schwenkachse 13 für die Verschwenkung der Stelleinheit 11 für die Höhen- bzw. Neigungsverstellung der Lenksäule. Die Halteeinheit 5 kann wiederum am Fahrzeugchassis befestigt werden, beispielsweise über angeschweißte Befestigungslaschen, die in Fig. 12 nicht dargestellt sind.

Unterschiedliche Modifikationen der gezeigten Ausführungsbeispiele sind denkbar und möglich, ohne den Bereich der Erfindung zu verlassen. So könnte die Zahnplatte 1 im geschlossenen Zustand der Feststelleinrichtung 12 auch einer Verstellung der Stelleinheit 11 in die der Längsverstellung der Lenksäule entsprechende Stellrichtung 18 entgegenwirken. Hierzu wären die vom Spannbolzen durchsetzten Langlöcher 21, 22 und die Zahnreihen der Verzahnungen 2, 7 in diese Stellrichtung 18 auszurichten.

Auch Anordnungen von Zahnplatten 1 an beiden Außenseiten der Seitenwangen 6 und entsprechende mit den Verzahnungen der Zahnplatten zusammenwirkende Verzahnungen 7 beider Seitenwangen 6 sind denkbar und möglich.

Anstelle der federelastischen Arme 9, 10 der Zahnplatte 1 oder zusätzlich zu diesen könnten auch zwischen der Zahnplatte 1 und der Halteeinheit 5 wirkende separate federelastische Elemente vorgesehen sein, beispielsweise in Sacklöchern der Seitenwange 6 angeordnete Schraubenfedern. Ein oder mehrere direkt zwischen der Halteeinheit 5 und dem Andrückteil 8 wirkende separate federelastische Elemente könnten ebenfalls vorgesehen sein.

In den gezeigten Ausführungsbeispielen verlaufen die Verzahnungen 2, 7 bogenförmig um die Schwenkachse 13. Statt dessen wäre auch ein gerader Verlauf der Verzahnungen 2, 7 denkbar und möglich. Die Zahnplatte 1 könnte hier mit einem Spiel in Richtung rechtwinklig zur Stellrichtung 3 gegenüber dem Andrückteil 8 gelagert sein und zur Ausrichtung für die Zahnplatte 1 gegenüber der Seitenwange 6 in diese Richtung könnte eine entsprechende Führung vorgesehen sein, beispielsweise durch vertiefte Führungsbahnen für die Anlageenden der Arme 9, 10 an der Seitenwange 6.

Die Mitnahme der Zahnplatte 1 vom Spannbolzen 19 bei einer Verschiebung des Spannbolzens 19 in die Verstellrichtung 3, in welche die Zahnplatte 1 wirkt, könnte beispielsweise auch dadurch bewirkt werden, dass die Zahnplatte 1 vom Spannbolzen 19 durch ein Rundloch mit geringem Spiel durchsetzt wird.

Grundsätzlich denkbar und möglich wäre es auch, die mindestens eine Verzahnung 2 der Zahnplatte 1 an einer Stufe der Zahnplatte 1 auszubilden, wobei eine Ausbildung am Seitenrand bevorzugt ist.

Auch eine Lenksäule, bei der die Halteeinheit nur eine auf einer der Seiten der Stelleinheit liegende Seitenwange aufweist, könnte in erfindungsgemäßer Weise ausgebildet sein.

Denkbar und möglich ist es auch, zumindest für die Stellrichtung, in die die Zahnplatte nicht wirkt, formschlüssige Feststellelemente vorzusehen. Es können hierbei günstigerweise solche Feststellelemente vorgesehen sein, die beim Schließen der Feststelleinrichtung jedenfalls sofort formschlüssig zusammenwirken.

Die Form der Verzahnung kann erfindungsgemäß sehr verschieden sein. Sowohl Spitz-Verzahnungen als auch Rund-Verzahnungen oder andere Verzahnungen können vorteilhaft eingesetzt werden.

Ebenso denkbar und möglich ist die Kombination und/oder der Austausch einzelner Merkmale, wie sie in verschiedenen Ausführungsformen der Erfindung anhand der verschiedenen Beispiele veranschaulicht sind.

### Legende

### zu den Hinweisziffern:

- 1: Zahnplatte
- 2: Verzahnung
- 3: Stellrichtung
- 4: Längsachse
- 5: Halteeinheit
- 6: Seitenwange
- 7: Verzahnung
- 8: Andrückteil
- 9: Arm
- 10: Arm
- 11: Stelleinheit
- 12: Feststelleinrichtung
- 13: Schwenkachse
- 14: Haltebügel
- 15: Seitenwange
- 16: Manteleinheit

- 17: Längsachse
- 18: Stellrichtung
- 19: Spannbolzen
- 20: Langloch
- 21: Langloch
- 22: Betätigungshebel
- 23: Keilscheibe
- 24: Gegenhalteteil
- 25: Fensterausnehmung
- 26: Fortsatz
- 27: Fortsatz
- 28: Lenkspindel
- 29: Klemmteil
- 30: Anlagefläche
- 31: Tragarm
- 32: Spannbacken
- 33: Keilscheibe
- 34: Kamm
- 35: Kamm

## Patentansprüche

1. Verstellbare Lenksäule für ein Kraftfahrzeug mit einer in mindestens einer Stellrichtung (3, 18) verstellbaren Stelleinheit (11), einer in diese Stellrichtung (3,18) unverstellbaren Halteeinheit (5) und einer Feststelleinrichtung (12), in deren geöffnetem Zustand die Stelleinheit (11) gegenüber der Halteeinheit (5) zur Einstellung der Position der Lenksäule verstellbar ist und in deren geschlossenem Zustand die Stelleinheit (11) gegenüber der Halteeinheit (5) von der Feststelleinrichtung festgestellt ist und die einen Spannbolzen (19), der Öffnungen in der Stelleinheit (11) und Halteeinheit (5) durchsetzt, mindestens eine vom Spannbolzen (19) durchsetzte Zahnplatte (1), die mindestens eine Verzahnung (2) mit vom Spannbolzen (19) weggerichteten Zähnen aufweist, und mindestens eine dem Spannbolzen (19) zugewandte Verzahnung (7) der Halteinheit (5) zum Zusammenwirken mit der mindestens einen Verzahnung (2) der Zahnplatte (1) im geschlossenen Zustand der Feststelleinrichtung umfasst, **dadurch gekennzeichnet, dass** die Zahnplatte (1) elastisch biegbar ausgebildet ist und zwischen der Halteeinheit (5) und einem von der Längsachse (4) des Spannbolzens (19) durchsetzten Andrückteil (8) angeordnet ist, von dem sie im geschlossenen Zustand der Feststelleinrichtung (12) an die Halteeinheit (5) angedrückt ist, wobei die mindestens eine Verzahnung (2) der Zahnplatte (1) im geöffneten Zustand der Feststelleinrichtung (12) durch Federkraft in Richtung der Längsachse (4) des Spannbolzens (19) von der mindestens einen Verzahnung (7) der Halteeinheit (5) distanziert ist.

2. Verstellbare Lenksäule nach Anspruch 1, **dadurch gekennzeichnet, dass** die Zahnplatte (1) auf der von der Stelleinheit (11) weggerichteten Außenseite einer neben der Stelleinheit (11) angeordneten, vom Spannbolzen (19) durch ein Langloch (20) durchsetzten Seitenwange (6) der Halteeinheit (5) liegt und die mindestens eine mit der mindestens einen Verzahnung (2) der Zahnplatte (1) zusammenwirkende Verzahnung (7) der Halteeinheit (5) an der Seitenwange (6) angeordnet ist.

3. Verstellbare Lenksäule nach Anspruch 1 oder 2, **dadurch gekennzeichnet, dass** die Halteeinheit (5) beidseitig der Stelleinheit (11) liegende Seitenwangen (6, 15) aufweist, die vom Spannbolzen (19) durchsetzte Langlöcher (20, 21) aufweisen und die im geschlossenen Zustand der Feststelleinrichtung (12) von dieser an die Stelleinheit (11) angedrückt sind.

4. Verstellbare Lenksäule nach einem der Ansprüche 1 bis 3, **dadurch gekennzeichnet, dass** die Stelleinheit (11) im geschlossenen Zustand der Feststelleinrichtung (12) gegenüber der Halteeinheit (5) durch zusammenwirkende Reibflächen der Stelleinheit (11) und Halteeinheit (5) in die Stellrichtung (3), in die die Zahnplatte (1) wirksam ist, reibschlüssig gehalten ist.

5. Verstellbare Lenksäule nach einem der Ansprüche 1 bis 4, **dadurch gekennzeichnet, dass** die mindestens eine Verzahnung (2) der Zahnplatte (1) außerhalb eines Andrückbereichs liegt, über den im geschlossenen Zustand der Feststelleinrichtung (12) das Andrückteil (8) an der Zahnplatte (1) anliegt.

6. Verstellbare Lenksäule nach einem der Ansprüche 1 bis 5, **dadurch gekennzeichnet, dass** sich bei einer Verstellung der Stelleinheit (11) gegenüber der Halteeinheit (5) in die Stellrichtung (3), in die die Zahnplatte (1) wirksam ist, die Zahnplatte (1) zusammen mit dem Spannbolzen (19) gegenüber der Halteeinheit (5) in diese Stellrichtung (3) verschiebt.

7. Verstellbare Lenksäule nach Anspruch 6, **dadurch gekennzeichnet, dass** zur Mitnahme der Zahnplatte (1) bei einer Verstellung der Stelleinheit (11) gegenüber der Halteeinheit (5) in die Stellrichtung (3), in welche die Zahnplatte (1) wirksam ist, mindestens ein Fortsatz (26, 27) des vom Spannbolzen (19) in diese Stellrichtung (3) mitgenommenen Andrückteils (8) in eine Fensterausnehmung (25) der Zahnplatte (1) eingreift, wobei vorzugsweise der mindestens eine Fortsatz (26, 27) des Andrückteils (8) zur Verdrehsicherung des Andrückteils (8) weiters in das Langloch (20) der Seitenwange (6) der Halteeinheit (5) eingreift.

8. Verstellbare Lenksäule nach einem der Ansprüche 1 bis 7, **dadurch gekennzeichnet, dass** die Zähne der mindestens einen Verzahnung (2) der Zahnplatte (1) in einer Reihe liegen, die sich zumindest im Wesentlichen in die Stellrichtung (3) erstreckt, in der die Zahnplatte (1) im geschlossenen Zustand der Feststelleinrichtung (12) einer Verstellung der Stelleinheit (11) gegenüber der Halteeinheit (5) entgegenwirkt.

9. Verstellbare Lenksäule nach einem der Ansprüche 1 bis 8, **dadurch gekennzeichnet, dass** die Zahnplatte (1) erste und zweite in entgegengesetzte Richtungen weisende Verzahnungen (2) und die Halteeinheit (5) erste und zweite einander zugewandte Verzahnungen (7) zum Zusammenwirken mit den Verzahnungen (2) der Zahnplatte (1) aufweist.

10. Verstellbare Lenksäule nach einem der Ansprüche 1 bis 9, **dadurch gekennzeichnet, dass** die mindestens eine Verzahnung (2) der Zahnplatte (1) an einem sich erstreckenden Seitenrand der Zahnplatte (1) angeordnet ist, vorzugsweise erste und zweite Verzahnungen (2) der Zahnplatte (1) an gegenüberliegenden Seitenrändern der Zahnplatte (1) angeordnet sind.

11. Verstellbare Lenksäule nach einem der Ansprüche 1 bis 10, **dadurch gekennzeichnet, dass** die Zahnplatte (1) im geschlossenen Zustand der Feststelleinrichtung (12) gegen eine Höhen- oder Neigungsverstellung der Lenksäule wirkt.

12. Verstellbare Lenksäule nach einem der Ansprüche 1 bis 11, **dadurch gekennzeichnet, dass** die Zahnplatte (1) an der Halteeinheit (5) sich abstützende federelastische Arme (9, 10) zur Distanzierung der mindestens einen Verzahnung (2) der Zahnplatte (1) von der mindestens einen Verzahnung (7) der Halteeinheit (5) beim Öffnen der Feststelleinrichtung (12) aufweist, wobei vorzugsweise die Zahnplatte (1) beim Öffnen der Feststelleinrichtung (12) das Andrückteil (8) in Richtung von der Halteeinheit (5) weg verschiebt..

13. Verstellbare Lenksäule nach einem der Ansprüche 1 bis 12, **dadurch gekennzeichnet, dass** die Längsachse (4) des Spannbolzens (19) rechtwinklig zur Längsachse (17) der Lenkspindel (28) steht.

14. Verstellbare Lenksäule nach einem der Ansprüche 1 bis 13, **dadurch gekennzeichnet, dass** die Zähne der mindestens einen Verzahnung (2) der Zahnplatte (1) und die Zähne der mindestens einen mit dieser zusammenwirkenden Verzahnung (7) der Halteeinheit (5) in eine Richtung weisen, die rechtwinklig zur Längsachse (4) des Spannbolzens (19) und rechtwinklig zur Stellrichtung (3) steht, in die die Zahnplatte (1) wirksam ist.

15. Verstellbare Lenksäule nach einem der Ansprüche 1 bis 14, **dadurch gekennzeichnet, dass** die Kämme (34) der mindestens einen Verzahnung (2) der Zahnplatte (1) und die Kämme (35) der mindestens einen mit dieser zusammenwirkenden Verzahnung (7) der Halteeinheit (5) parallel zur Längsachse (4) des Spannbolzens (19) sich erstrecken.

## Claims

1. An adjustable steering column for a motor vehicle with a setting unit (11) adjustable in at least one setting direction (3, 18), a retaining unit (5) non-adjustable in the said setting direction (3, 18) and a fixing device (12), in the opened state of which the setting unit (11) is adjustable with respect to the retaining unit (5) in order to set the position of the steering column and in the closed state of which the setting unit (11) is fixed by the fixing device with respect to the retaining unit (5) and which comprises a clamping pin (19) which passes through openings in the setting unit (11) and the retaining unit (5), at least one toothed plate (1) through which the clamping pin (19) passes and which has at least one set of teeth (2) with teeth directed away from the clamping pin (19), and at least one set of teeth (7) - towards the clamping pin (19) - of the retaining unit (5) for co-operating with the at least one set of teeth (2) of the toothed plate (1) in the closed state of the fixing device, **characterized in that** the toothed plate (1) is designed to be flexible in a resilient manner and is arranged between the retaining unit (5) and a pressing part (8) which is traversed by the longitudinal axis (4) of the clamping pin (19) and by which the said toothed plate (1) is pressed against the retaining unit (5) in the closed state of the fixing device (12), wherein the at least one set of teeth (2) of the toothed plate (1) is spaced from the at least one set of teeth (7) of the retaining unit (5) by spring force in the direction of the longitudinal axis (4) of the clamping pin (19) in the opened state of the fixing device (12).

2. An adjustable steering column according to Claim 1, **characterized in that** the toothed plate (1) is situated on the outside - directed away from the setting unit (11) - of a side piece (6) of the retaining unit (5) which is situated adjacent to the setting unit (11) and which is traversed by the clamping pin (19) through an elongate hole (20), and the at least one set of teeth (7) of the retaining unit (5) co-operating with the at least one set of teeth (2) of the toothed plate (1) is arranged on the side piece (6).

3. An adjustable steering column according to Claim 1 or 2, **characterized in that** the retaining unit (5) has side pieces (6, 15) which are arranged on both sides of the setting unit (11) and which have elongate holes (20, 21) traversed by the clamping pin (19) and which are pressed against the setting unit (11) by the fixing device (12) in the closed state of the said fixing device (12).

4. An adjustable steering column according to any one of Claims 1 to 3, **characterized in that** in the closed state of the fixing device (12) the setting unit (11) is held by friction locking with respect to the retaining unit (5) by co-operating friction faces of the setting unit (11) and the retaining unit (5) in the setting direction (3) in which the toothed plate (1) acts.

5. An adjustable steering column according to any one of Claims 1 to 4, **characterized in that** the at least one set of teeth (2) of the toothed plate (1) is arranged outside a pressing region by way of which the pressing part (8) rests against the toothed plate (1) in the closed state of the fixing device (12).

6. An adjustable steering column according to any one of Claims 1 to 5, **characterized in that**, during an adjustment of the setting unit (11) with respect to the retaining unit (5) in the setting direction (3) in which the toothed plate (1) acts, the toothed plate (1) together with the clamping pin (19) is displaced with respect to the retaining unit (5) in the said setting direction (3).

7. An adjustable steering column according to Claim 6, **characterized in that**, in order to entrain the toothed plate (1) during an adjustment of the setting unit (11) with respect to the retaining unit (5) in the setting direction (3) in which the toothed plate (1) acts, at least one extension (26, 27) of the pressing part (8) entrained by the clamping pin (19) in the said setting direction (3) engages in a window recess (25) in the toothed plate (1), wherein the at least one extension (26, 27) of the pressing part (8) preferably engages further into the elongate hole (20) in the side piece (6) of the retaining unit (5) in order to prevent rotation of the pressing part (8).

8. An adjustable steering column according to any one of Claims 1 to 7, **characterized in that** the teeth of the at least one set of teeth (2) of the toothed plate (1) are arranged in a row which extends at least substantially in the setting direction (3) in which the toothed plate (1) counteracts an adjustment of the setting unit (11) with respect to the retaining unit (5) in the closed state of the fixing device (12).

9. An adjustable steering column according to any one of Claims 1 to 8, **characterized in that** the toothed plate (1) has first and second sets of teeth (2) pointing in opposed directions and the retaining unit (5) has first and second sets of teeth (7) facing one another in order to co-operate with the sets of teeth (2) of the toothed plate (1).

10. An adjustable steering column according to any one of Claims 1 to 9, **characterized in that** the at least one set of teeth (2) of the toothed plate (1) is arranged on an extending lateral edge of the toothed plate (1), it being preferable for the first and second sets of teeth (2) of the toothed plate (1) to be arranged on opposed lateral edges of the toothed plate (1).

11. An adjustable steering column according to any one of Claims 1 to 10, **characterized in that** in the closed state of the fixing device (12) the toothed plate (1) counteracts a vertical or inclination adjustment of the steering column.

12. An adjustable steering column according to any one of Claims 1 to 11, **characterized in that** the toothed plate (1) has resilient arms (9, 10) supported on the retaining unit (5) for spacing the at least one set of teeth (2) of the toothed plate (1) from the at least one set of teeth (7) of the retaining unit (5) during the opening of the fixing device (12), wherein the toothed plate (1) preferably displaces the pressing part (8) in the direction away from the retaining unit (5) during the opening of the fixing device (12).

13. An adjustable steering column according to any one of Claims 1 to 12, **characterized in that** the longitudinal axis (4) of the clamping pin (19) is arranged at a right angle to the longitudinal axis (17) of the steering spindle (28).

14. An adjustable steering column according to any one of Claims 1 to 13, **characterized in that** the teeth of the at least one set of teeth (2) of the toothed plate (1) and the teeth of the at least one set of teeth (7) of the retaining unit (5) co-operating with the latter point in a direction which is at a right angle to the longitudinal axis (4) of the clamping pin (19) and at a right angle to the setting direction (3) in which the toothed plate (1) acts.

15. An adjustable steering column according to any one of Claims 1 to 14, **characterized in that** the ridges (34) of the at least one set of teeth (2) of the toothed plate (1) and the ridges (35) of the at least one set of teeth (7) of the retaining unit (5) co-operating with the latter extend parallel to the longitudinal axis (4) of the clamping pin (19).

## Revendications

1. Colonne de direction réglable de véhicule automobile comprenant :
- une unité de réglage (11) réglable dans au moins une direction de réglage (3, 18),
- une unité de support (5) non réglable dans cette direction de réglage (3, 18), et
- une installation de blocage (12) qui, à l'état ouvert, permet de régler l'unité de réglage (11) par rapport à l'unité de support (5) pour régler la position de la colonne de direction et qui, en position fermée, bloque l'unité de réglage (11) par rapport à l'unité de support (5) et une broche de serrage (19) traversant des ouvertures de l'unité de réglage (11) et de l'unité de support (5),
- au moins une plaque dentée (1) traversée par la broche de serrage (19), et ayant au moins une denture (2) avec des dents dirigées vers l'opposé de la broche de serrage (19), et
- au moins une denture (7) de l'unité de support (5) tournée vers la broche de serrage (19) pour coopérer avec au moins une denture (2) de la plaque dentée (1) lorsque l'installation de blocage est à l'état fermé,
**caractérisée en ce que**
la plaque dentée (1) est élastique flexible et entre l'unité de support (5) et une pièce de poussée (8) traversée par l'axe longitudinal (4) de la broche de serrage (19), qui la presse contre l'unité de support (5) en position de fermeture de l'installation de blocage (12),
au moins une denture (2) de la plaque dentée (1), en position ouverte de l'installation de blocage (12), est tenue écartée par la force des ressorts agissant dans la direction de l'axe longitudinal (4) de la broche de serrage (19) au moins d'une denture (7) de l'unité de support (5).

2. Colonne de direction réglable selon la revendication 1,
**caractérisée en ce que**
la plaque dentée (1) est prévue sur le côté extérieur non tourné vers l'unité de réglage (11) d'une paroi latérale (6) de l'unité de support (5), paroi prévue à côté de l'unité de réglage (11) et traversée par la broche de serrage (19) passant à travers un trou oblong (20) de la paroi latérale, et au moins une denture (7) de l'unité de support (5) coopérant avec au moins une denture (2) de la plaque dentée (1), est prévue sur la paroi latérale (6).

3. Colonne de direction réglable selon la revendication 1 ou 2,
**caractérisée en ce que**
l'unité de support (5) comporte des parois latérales (6, 15) situées des deux côtés de l'unité de réglage (11), ces parois ayant des trous oblongs (20, 21) traversés par la broche de serrage (19) et elles sont pressées contre l'unité de réglage (11) par l'installation de blocage (12) à l'état fermé.

4. Colonne de direction réglable selon l'une des revendications 1 à 3,
**caractérisée en ce qu'**
à l'état fermé de l'installation de blocage (12), l'unité de réglage (11) est tenue par une liaison par friction par rapport à l'unité de support (5) par la coopération de surfaces de friction de l'unité de réglage (11) et de l'unité de support (5) dans la direction de réglage (3), dans laquelle agit la plaque dentée (1).

5. Colonne de direction réglable selon l'une des revendications 1 à 4,
**caractérisée en ce qu'**
au moins une denture (2) de la plaque dentée (1) se situe à l'extérieur d'une zone de compression par laquelle, à l'état fermé de l'installation de blocage (12), la pièce de poussée (8) s'applique contre la plaque dentée (1).

6. Colonne de direction réglable selon l'une des revendications 1 à 5,
**caractérisée en ce qu'**
en cas de déplacement de l'unité de réglage (11) par rapport à l'unité de support (5) dans la direction de réglage (3), dans laquelle agit la plaque dentée (1) qui coulisse avec la broche de serrage (19) dans cette direction (3) par rapport à l'unité de support (5).

7. Colonne de direction réglable selon la revendication 6,
**caractérisée en ce que**
pour entraîner la plaque dentée (1), en cas de déplacement de l'unité de réglage (11) par rapport à l'unité de support (5) dans la direction de réglage (3) dans laquelle la plaque dentée (1) est active, au moins un prolongement (26, 27) de la pièce de poussée (8) entraînée dans cette direction de réglage (3) par le goujon de serrage (19), pénètre dans une cavité en forme de fenêtre (25) de la plaque dentée (1), et
de préférence, au moins un prolongement (26, 27) de la pièce de poussée (8) pénètre plus dans le trou oblong (20) de la paroi latérale (6) de l'unité de support (5), pour garantir le blocage en rotation de la pièce de poussée (8).

8. Colonne de direction réglable selon l'une des revendications 1 à 7,
**caractérisée en ce que**
les dents d'au moins une denture (2) de la plaque dentée (1) se situent dans une ligne qui s'étend au moins pour l'essentiel dans la direction de réglage (3), dans laquelle à l'état fermé de l'installation de blocage (12), la plaque dentée (1) s'oppose à un déplacement de l'unité de réglage (11) par rapport à l'unité de support (5).

9. Colonne de direction réglable selon l'une des revendications 1 à 8,
**caractérisée en ce que**
la plaque dentée (1) comporte des dents (2) dirigées dans une première et dans une deuxième direction, opposées l'une à l'autre, et l'unité de support (5) comporte des premières et des secondes dentures (7) tournées l'une vers l'autre pour coopérer avec les dentures (2) de la plaque dentée (1).

10. Colonne de direction réglable selon l'une des revendications 1 à 9,
**caractérisée en ce qu'**
au moins une denture (2) de la plaque dentée (1) est prévue sur un bord latéral de la plaque dentée (1), de préférence, une première et une seconde denture (2) de la plaque dentée (1) sont prévues sur les bords latéraux opposés de la plaque dentée (1).

11. Colonne de direction réglable selon l'une des revendications 1 à 10,
**caractérisée en ce qu'**
à l'état fermé de l'installation de blocage (12), la plaque dentée (1) s'oppose à un déplacement en hauteur et en inclinaison de la colonne de direction.

12. Colonne de direction réglable selon l'une des revendications 1 à 11,
**caractérisée en ce que**
la plaque dentée (1) comporte des bras élastiques à ressort (9, 10) s'appuyant contre l'unité de support (5) pour écarter au moins une denture (2) de la plaque dentée (1), par rapport à au moins une denture (7) de l'unité de support (5) à l'ouverture de l'installation de blocage (12),
de préférence, la plaque dentée (1), à l'ouverture de l'installation de blocage (12), écarte la pièce de poussée (8) dans la direction s'éloignant de l'unité de support (5).

13. Colonne de direction réglable selon l'une des revendications 1 à 12,
**caractérisée en ce que**
l'axe longitudinal (4) de la broche de serrage (19) est à l'équerre par rapport à l'axe longitudinal (17) de la broche de direction (28).

14. Colonne de direction réglable selon l'une des revendications 1 à 13,
**caractérisée en ce que**
les dents d'au moins une denture (2) de la plaque dentée (1) et les dents d'au moins une denture (7) de l'unité de support (5) coopérant avec la précédente, sont dirigées dans une direction perpendiculaire à l'axe longitudinal (4) de la broche de serrage (19) et perpendiculairement à la direction de réglage (3), dans laquelle agit la plaque dentée (1).

15. Colonne de direction réglable selon l'une des revendications 1 à 14,
**caractérisée en ce que**
les peignes (34) d'au moins une denture (2) de la plaque dentée (1) et les peignes (35) d'au moins une denture (7) de l'unité de support (5) coopérant avec la précédente, s'étendent parallèlement à l'axe longitudinal (4) de la broche de serrage (19).
